# EUROPÄISCHE PATENTSCHRIFT

(11) **EP 2 881 692 B1**
(45) Veröffentlichungstag und Bekanntmachung des Hinweises auf die Patenterteilung: **11.04.2018**
(21) Anmeldenummer: 14003968.6
(22) Anmeldetag: 26.11.2014
(51) Int. Cl.: F28F 9/02, F28F 19/00, F28F 9/16, F28D 7/16, F02C 7/141, F28D 21/00

(54) **Gasturbinenkühlluftkühler, Gasturbinen- oder Gas- und Dampfturbinen- Kraftwerk sowie Verfahren zum Kühlen von Kühlluft**
Gas turbine cooling air cooler, gas turbine or gas and steam turbine power station and method for cooling cooling air
Refroidisseur d'air froid de turbines à gaz, centrale de turbines à gaz ou de turbines à gaz et à vapeur ainsi que procédé de refroidissement d'air froid

(30) Priorität: 09.12.2013 EP 13005713
(43) Veröffentlichungstag der Anmeldung: 10.06.2015
(73) Patentinhaber: Balcke-Dürr GmbH, 40472 Düsseldorf (DE)
(72) Erfinder: Telgen, Thomas, D-40878 Ratingen (DE); Staggenborg, Tim, D-40880 Ratingen (DE); Blossey, Jens, D-45663 Recklinghausen (DE); Band, Dirk, 30167 Hannover (DE); Fiorenzano De Albuquerque, Ricardo, 52061-450 Recife-PE (BR); Ivanov, Igor, D-45276 Essen (DE); Hegner, Wolfgang,Dr., 46236 Bottrop (DE)
(74) Vertreter: Heidler, Philipp

(56) Entgegenhaltungen:
- EP-A1- 1 995 543
- EP-A2- 1 065 467
- WO-A1-2009/066260
- DE-A1- 3 022 480
- DE-A1- 19 548 688
- JP-A- H08 291 996
- US-A- 3 707 186
- US-A- 4 897 908
- US-A1- 2005 040 023

## Beschreibung

Die Erfindung betrifft einen Gasturbinenkühlluftkühler, ein Gasturbinen- oder Gas-und-Dampfturbinen-Kraftwerk sowie ein Verfahren zum Kühlen von Kühlluft mit einem solchen Gasturbinenkühlluftkühler gemäß den unabhängigen Ansprüchen.

Wärmetauscher an sich sind bekannt und dienen dazu, Wärme zwischen einem Wärme abgebenden, zu kühlenden Medium (vorliegend als primäres Fluid bezeichnet) und einem Wärme aufnehmenden, zu erwärmenden Medium (vorliegend als sekundäres Fluid oder auch als "Kühlfluid" bezeichnet) auszutauschen, wobei die beiden Medien bei den vorliegend relevanten Wärmetauschern voneinander räumlich getrennt sind und sich insbesondere nicht vermischen. Solche Wärmetauscher finden in vielerlei industriellen Anwendungen Verwendung, beispielsweise in einem Gasturbinenkühlluftkühler zur Kühlung von Kühlluft für eine Gasturbine, insbesondere eines Gasturbinenkraftwerks oder eines Gas-und-Dampfturbinenkraftwerks, um hier durch Kompression erwärmte Luft (primäres Fluid) zu kühlen und somit die Kühlwirkung in der Gasturbine zu verbessern. Eine weitere Anwendung sind Prozessgaskühler in der Chemieindustrie, beispielsweise Synthesegaskühler in Ammoniakanlagen. Neben der zu kühlenden Kühlluft, die nicht selten eingangsseitig zum Gasturbinenkühlluftkühler in Temperaturbereichen von über 400 °C und teilweise sogar über 450 °C liegt, handelt es sich bei dem sekundären Fluid häufig um Wasser.

Die hier verwendeten Wärmetauscher können in konstruktiver Hinsicht in verschiedene Gruppen eingeteilt werden. Eine Gruppe sind die sogenannten Rohrbündelwärmetauscher, deren prinzipieller Grundaufbau ebenfalls bereits aus dem Stand der Technik bekannt ist. Rohrbündelwärmetauscher zeichnen sich dadurch aus, dass sie gleichzeitig eine Vielzahl von, typischerweise nebeneinander geführten, Rohren umfassen, in denen, je nach Anwendungsfall, das primäre Fluid (beispielsweise Luft) in Strömungsrichtung strömt. Gleichzeitig umströmt das sekundäre Fluid die Außenseite der Rohre, so dass ein Wärmeaustausch zwischen den beiden Fluiden erfolgen kann.

Derartige Rohrbündelwärmetauscher umfassen ferner häufig einen Druckbehälter, insbesondere beispielsweise in Form eines Hohlzylinders. Der Druckbehälter weist beispielsweise einen im Wesentlichen hohlzylindrischen Außenmantel auf, der zu seinen Stirnseiten mit einer Eintrittsrohrscheibe und einer Austrittsrohrscheibe begrenzt ist, die insbesondere mit einem Außenmantel verschweißt sein können. Eine Rohrscheibe ist üblicherweise ein scheibenartiges Bauteil, das die Rohre des Rohrbündels lagert. Die Eintrittsrohrscheibe bezeichnet die Rohrscheibe, die von dem primären Fluid beim rohrseitigen Eintritt in den Druckbehälter passiert wird. Die Austrittsrohrscheibe bezeichnet die in Bezug auf die Strömungsrichtung des primären Fluids stromabwärts gelegene Rohrscheibe, die vom primären Fluid beim Austritt aus dem Druckbehälter passiert wird. Der Außenmantel, die Eintritts- und die Austrittsrohrscheibe umschließen somit zusammen einen Innenraum des Druckbehälters. Der Innenraum wird von den Rohren des Rohrbündels durchlaufen. Die Rohre sind mit ihren End- bzw. Anfangsabschnitten somit jeweils in Ausnehmungen der Rohrscheiben aufgenommen. Sind die Rohre gradlinig längserstreckt ausgebildet, so dass sich typischerweise die Längsachse der Druckbehälters parallel zur Längsachse der Rohre erstreckt, liegt ein Rohrbündelwärmetauscher in Geradrohrbauweise vor. Charakteristisch für diese Art der Rohrbündelwärmetaucher ist insbesondere die vollständig gradlinige Führung der einzelnen Rohre durch den Druckbehälter. Diese sind somit beispielsweise nicht U-förmig gebogen. Entsprechend liegen die zueinander separat ausgebildete Eintrittsrohrscheibe und Austrittsrohrscheibe einander gegenüber. Im Betrieb des Rohrbündelwärmetauschers strömt das sekundäre Fluid (insbesondere Kühlwasser) durch den Hohlzylinder bzw. Druckbehälter an der Außenseite der Rohre und das primäre Fluid (insbesondere Luft) strömt innerhalb der Rohre durch den Druckbehälter. Dabei kühlt das wärmere der beiden Fluide ab, während das kältere Fluid durch den Wärmetausch aufgeheizt wird. Zur Abfuhr der Wärme aus beispielsweise Luft zur Kühlung einer Gasturbine werden somit typischerweise die Rohre innerhalb des Druckbehälters mantelseitig, d.h. auf der Außenseite der Rohre, mit Wasser umspült. Das kann ohne Phasenwechsel stattfinden. Häufig wird das Wasser dabei jedoch verdampft und damit die Energieaufnahme durch die hohe Verdampfungsenthalpie erhöht. Der mantelseitige Massenstrom wird somit klein gehalten. Der erzeugte Dampf kann in einen Abhitzekessel abgeführt oder auch als Prozessdampf verwendet werden. Der Druckbehälter kann somit ergänzend neben dem Kühlfluideinlass ergänzend oder alternativ zum Kühlfluidauslass (Auslass für flüssiges Kühlfluid) auch einen Dampfauslass (Auslass für verdampftes Kühlfluid), insbesondere, wenn das Kühlfluid Wasser ist, aufweisen. Das primäre Fluid wird den Rohren üblicherweise über eine Luftkammer mit einem Lufteintrittsstutzen über die Eintrittsrohrscheibe zugeführt. Zur Luftkammer hin sind eine Vielzahl und insbesondere alle Rohre des Rohrbündelwärmetauschers geöffnet. Nachdem die zu kühlende Luft die Rohre des Rohrbündelwärmetauschers passiert hat, tritt sie über die Austrittsrohrscheibe in eine stromabwärts gelegene Luftkammer aus den einzelnen Rohren aus, wird dort vereinigt und anschließend über einen Luftaustrittsstutzen abgeführt. Solche gattungsgemäßen Rohrbündelwärmetauscher sind beispielsweise aus den Patentschriften EP 11995543 A1, US 2005/040023 A1, EP 1065467 A2, DE 19548688 A1, DE 3022480 A1, WO 2009/066260 A1, US 3707186 A, US 4897908 A und JP H08-291996 A bekannt.

Problematisch bei den aus dem Stand der Technik bekannten Rohrbündelwärmetauschern ist, dass an den Rohrscheiben, in welche die Rohre bzw. deren End- und Anfangsabschnitte üblicherweise fest gewalzt sind, im Betrieb hohe thermische Spannungen entstehen. Insbesondere aufgrund der Tatsache, dass die Rohrscheiben üblicherweise an dem Mantel des Hohlzylinders befestigt sind und in vielen Anwendungen, z. B. in Boilern, bei Kraft-Wärme-Kopplung etc., ein hoher Temperaturgradient zwischen der Kaltseite und der Warmseite des Wärmeüberträgers auftritt, werden die Rohrscheiben, insbesondere auf der Hochtemperaturseite bzw. auf Seiten der Eintrittsrohrscheibe und damit die Zufuhrseite des Primärfluids in die Geradrohre, durch hohe thermische Spannungen stark beansprucht. Besonders problematisch ist dabei eine ungleichmäßige Wärmeverteilung in Radialrichtung der Eintrittsrohrscheibe zwischen den Rohren und der Rohrscheibe. Infolgedessen kann das Material der Rohrscheibe beschädigt werden und der Rohrbündelwärmetauscher verliert dann seine Funktionsfähigkeit. Ferner ist bei der Konstruktion eines gattungsgemäßen Rohrbündelwärmetauschers, insbesondere zum Einsatz in einem Gasturbinenkühlluft Kühler, zu berücksichtigen, dass aufgrund hoher Reinheitsanforderungen der Gasturbine für die Rohrseite, d.h. die Innenseite der Rohre, rostfreie Materialien unabdingbar sind. Gleichzeitig ist jedoch der hohen Temperaturbelastung durch das zu kühlende primäre Fluid, das, insbesondere bei der Kühlung von Kühlluft in einem Gasturbinenkühlluftkühler, eine Temperatur von zum Teil über 450 °C aufweisen kann, ausreichend Rechnung zu tragen. Entsprechend sollten der Einlassbereich zur Eintrittsrohrscheibe hin sowie die Rohre in diesem Bereich eine Temperaturbeständigkeit von etwa 500 °C bis hin zu 550 °C aufweisen. Der Druckbehälter wird aus Kostengründen üblicherweise aus einem unlegierten Druckbehälterstahl ausgeführt, wie sie insbesondere in der Normenfamilie DIN [*Deutsches Institut für Normung*] EN [*Europäische Norm*] 10028 näher angegeben sind. Im Betrieb heizt die zu kühlende Kühlluft die Bauteile im Eintrittsbereich des Rohrbündelwärmetauschers, wie beispielsweise die der Eintrittsrohrscheibe vorgelagerte Kammer sowie die Eintrittsrohrscheibe selbst, relativ zum Mantel des Druckbehälters erheblich auf. Hier können Temperaturdifferenzen von bis zu 200 K auftreten. Daraus resultieren verhältnismäßig hohe Spannungen und Verformungen. Es ist daher insbesondere für Geradrohrapparate mit deutlich unterschiedlichen Temperaturen auf Rohr- und Mantelseite und/oder Materialkombinationen mit austenitischen Wärmetauscherrohren und einem ferritischen Mantel mit voneinander abweichenden Ausdehnungskoeffizienten die Verwendung eines sogenannten Mantelkompensators zum Ausgleich der temperaturbedingten Längenänderungen erforderlich. Ein solcher Mantelkompensator ist vergleichsweise kosten- und wartungsintensiv und daher nachteilig. Unter anderem ist der Mantelkompensator aufgrund der an ihm vorhandenen Schweißnähte und seiner beweglichen Teile häufig eine zusätzliche Schwachstelle und Auslöser für Leckagen. Darüber hinaus können schwierig zu bestimmende Reibkräfte aus den Loslager-Sätteln sowie Rohrleitungskräfte nicht vom Mantel sondern nur von den Wärmetauscherrohren übertragen werden. Die Verbindung zwischen Rohr und Rohrscheibe ist dabei stark belastet. Darüber hinaus stellen Kunden häufig die Bedingung, eine Anlage, beispielsweise einen Gasturbinenkühlluftkühler, unter Verzicht auf derartige Mantelkompensatoren zur Verfügung zu stellen.

Bei chloridhaltigen Medien auf der Mantelseite neigen zudem einige Rohrmaterialien zur sogenannten Spannungsrisskorrosion (SRK). Dieses Phänomen tritt besonders an der Verbindung der Rohre zur Rohrscheibe auf, da sich im Spalt Chloride ansammeln können. Die nötigen Spannungen resultieren aus thermischen Ausdehnungen und Verformungen des Apparats. SRK kann in kürzester Zeit, innerhalb von Tagen, bereits zu Schäden führen. Das üblicherweise verwendete austenitische Rohrmaterial, das häufig für die Geradrohre bei gattungsgemäßen Geradrohrwärmetauschern eingesetzt wird (insbesondere 1.4301 oder 1.4306 gemäß DIN EN 10088-1:2005 oder TP304 oder TP304L gemäß ASTM [*American Society for Testing and Materials*] bzw. ASME [*American Society of Mechanical Engineers*]), weist jedoch häufig keine gute Widerstandsfähigkeit gegen SRK auf. Im Mantelraum wird Wasser verdampft, wodurch gleichzeitig Chloride in diesem Bereich unerwünscht aufkonzentriert werden. Im Spalt zwischen Rohr und Rohrscheibe lagern sich dann entsprechende Chloride ab. Der Ausfall eines Kühlluftkühlers kann dabei ein gesamtes Gaskraftwerk bis zur Instandsetzung vollständig außer Betrieb setzen.

Es ist daher die Aufgabe der vorliegenden Erfindung, eine Möglichkeit zur Ausgestaltung eines Gasturbinenkühlluftkühlers mit einem Rohrbündelwärmetauscher bereitzustellen, mittels welcher hohe thermische Spannungen an der Rohrscheibe vermieden oder zumindest erheblich reduziert werden können, so dass kein Mantelkompensator mehr erforderlich ist. Gleichzeitig soll das Auftreten von SRK verhindert oder zumindest verzögert werden.

Diese Aufgabe wird durch einen Gasturbinenkühlluftkühler mit einem Rohrbündelwärmetauscher in Geradrohrbauweise sowie ein Verfahren zum Kühlen von Kühlluft mit einem solchen Gasturbinenkühlluftkühler gemäß den unab-Verfahren zum Kühlen von Kühlluft mit einem solchen Gasturbinenkühlluftkühler gemäß den unabhängigen Ansprüchen gelöst. Vorteilhafte Ausführungsformen sind in den jeweiligen abhängigen Ansprüchen angegeben.

Ein wesentlicher Grundgedanke der Erfindung besteht nun darin, dass die Geradrohre des Rohrbündelwärmetauschers aus einem ferritischen, nichtrostenden Stahl bestehen, während der Außenmantel des Druckbehälters aus einem nicht legierten Stahl besteht. Ferritische, nicht rostende Stähle haben unter anderem den Vorteil, dass sie erheblich widerstandsfähiger gegenüber SRK sind. Sofern nachfolgend auf bestimmte Stahlbezeichnungen und Eigenschaften der verwendeten Stähle Bezug genommen wird, richtet sich die Verwendung dieser Bezeichnungen primär nach den in den Normen DIN EN 10088-1:2005, DIN EN 10020:2000, DIN EN 10027-1:2005 und DIN EN 10027-2:1992 niedergelegten Definitionen und Bedeutungen. Unter "nichtrostenden Stählen" werden demnach Stahlsorten zusammengefasst, mit einem Massenanteil von Chrom von mindestens 10,5% und höchstens 1,2% Kohlenstoff. Ergänzend wird nachstehend ferner auf nach ASME-Standards festgelegte Bezeichnungen von Stählen Bezug genommen. ASME steht für die *American Society of Mechanical Engineers.* Aus der übergeordneten Gruppe bekannter ferritischer, nichtrostender Stähle haben sich dabei insbesondere die folgenden Stähle als besonders bevorzugt erwiesen: 1.4509 (DIN EN 10088-1:2005), 1.4510 (DIN EN 10088-1:2005), 1.4511 (DIN EN 10088-1:2005), 1.4512 (DIN EN 10088-1:2005), 1.4513 (DIN EN 10088-1:2005), 1.4520 (DIN EN 10088-1:2005), 1.4521 (DIN EN 10088-1:2005), 1.4607 (prEN 10088-2011), TP409 (ASME), TP439 (ASME) und TP444 (ASME), wobei hier das Stahlmaterial mit der Werkstoffbezeichnung 1.4510 ganz besonders bevorzugt ist. Ein weiterer wesentlicher Vorteil dieser ferritischen, nichtrostenden Stähle liegt darin, dass sie einen Wärmeausdehnungskoeffizienten [K⁻¹] aufweisen, der kleiner ist als der Wärmeausdehnungskoeffizient [K⁻¹] des vorzugsweise aus einem nicht legiertem Stahl bestehenden Druckbehältermantels. "Nicht legierte Stähle" bzw. "unlegierte Stähle" sind in den DIN EN 10020:2000 unter Punkt 3.2.1 definiert und festgelegt. Diese Definition wird hiermit im Umfang der vorliegenden Offenbarung übernommen. Besonders bevorzugte Stahlsorten zur Fertigung des Außenmantels des Druckbehälters sind insbesondere P355NH (DIN EN 10028-3), 15NiCuMoNb5-6-4 (DIN EN 10028-2), 20MnMoNi4-5 (DIN EN 10028-2), 13CrMo4-5 (DIN EN 10028-2), 10CrMo9-10 (DIN EN 10028-2), SA-516-Gr.71 (ASME), SA-302-Gr. B (ASME) oder SA-533-Gr. B (ASME). Diese bestimmte Materialkombination "ferritischer, nicht rostender" Stähle für die Geradrohre und "nicht legierter Stähle" für den Druckbehältermantel hat den Vorteil, dass sich temperaturbedingte Längenausdehnungen im Betrieb praktisch kompensieren. Insgesamt kann bei einer derartigen Auslegung und Materialauswahl sogar vollständig auf einen Mantelkompensator verzichtet werden.

Wichtig ist in diesem Zusammenhang allerdings, dass ferritische Rohrmaterialien üblicherweise nur bei Temperaturen von bis zu 430 °C eingesetzt werden können. Die Temperatur des in die Rohre im Bereich der Eintrittsrohrscheibe eintretenden primären Fluids ist allerdings bei einer Vielzahl von Einsatzsituationen höher und entsprechend sind in den geforderten Kundenspezifikationen in Bezug auf die Temperaturtoleranz des Rohrbündelwärmetauschers des erfindungsgemäßen Gasturbinenkühlluftkühlers häufig höhere mögliche Eingangstemperaturen des primären Fluids gefordert. Dies trifft beispielsweise auf zu kühlende Kühlluft in einem Kühlluftkreislauf für eine Gasturbine zu. Die dort zum Gasturbinenkühlluftkühler geführte zu kühlende Luft (primäres Fluid) hat häufig im Bereich der Eintrittsrohrscheibe eine Eintrittstemperatur von größer 470°C. Üblicherweise würde die gesamte Rohrseite (Rohre, Rohrscheibe, Kammern) auf die maximal mögliche Betriebstemperatur (Konzessionstemperatur) ausgelegt. Da die erfindungsgemäßen Geradrohre aus ferritischem, nicht rostendem Stahl jedoch in diesem Temperaturbereich nicht mehr zulässig wären, ist ein Einsatz somit nur dann möglich, wenn die Konzessionstemperatur der Rohre abgesenkt wird. Nach internationalen Regelwerken, wie beispielsweise in der EN 13445 und der ASME Div. 8 Sec. 1&2, ist ein Absenken der Konzessionstemperatur des Rohres nur möglich, wenn eine ununterbrochene Kühlung des Rohres im Betrieb sichergestellt ist. Dies ist für die im Inneren des Druckbehälters liegenden Anteile der Geradrohre unproblematisch, da diese kontinuierlich vom Kühlmedium, vorzugsweise Wasser, umspült sind. Insbesondere für den Fall, dass das zu kühlende Fluid aufgeheizte Luft ist und das Kühlfluid Wasser, liegt die Rohrwandtemperatur aufgrund der Verhältnisse der Wärmeübergänge nahe an der Temperatur des flüssigen Mediums. Hier muss somit lediglich systemtechnisch gewährleistet sein, dass die Rohre im Betrieb mantelseitig immer mit Wasser bedeckt sind. Hierzu kann beispielsweise auf bekannte Sensor- und Steuerungssysteme zurückgegriffen werden. Kritischer sind in diesem Zusammenhang die nicht direkt mit dem Kühlfluid (sekundären Fluid) in Kontakt stehenden Anteile der Geradrohre. Dies betrifft speziell die in der Eintrittsrohrscheibe liegenden Teile der Geradrohre. Diese werden von außen gerade nicht vom Kühlmedium umspült. Erfindungsgemäß ist es daher zur Lösung der Aufgabe auch vorgesehen, dass, zusätzlich zur vorstehenden Materialauswahl insbesondere hinsichtlich der Geradrohre, in zumindest einem Geradrohr und insbesondere in allen Geradrohren des Rohrbündelwärmetauschers von der Anzahl von Geradrohren aus ferritischem, nicht rostendem Stahl jeweils eine thermische Isolationseinrichtung auf Höhe der Eintrittsrohrscheibe angeordnet ist. Auf diese Weise ist es möglich, auch mit den erfindungsgemäß verwendeten "ferritischen, nicht rostenden" Stählen insbesondere Fluidtemperaturen von größer 470 °C bis vorzugsweise maximal 550 °C mit dem erfindungsgemäßen Rohrbündelwärmetauscher zu kühlen, obwohl die maximale Temperaturbelastung der aus "ferritischen, nicht rostendem" Stahl bestehenden Geradrohre im Normalfall nur bis maximal 430 °C beträgt. Ein weiterer Aspekt der Erfindung liegt in konstruktiver Hinsicht somit nun darin, dass gleichzeitig zur vorstehenden Materialkombination in zumindest einem Geradrohr und ganz besonders in allen Geradrohren von der Anzahl von Geradrohren aus ferritischem, nicht rostendem Stahl des Rohrbündelwärmetauschers jeweils eine thermische Isolationseinrichtung zumindest auf Höhe der Eintrittsrohrscheibe angeordnet ist. Die wesentliche Aufgabe der thermischen Isolationseinrichtung liegt darin, die Wärmeübertragung von dem zu kühlenden primären Fluid im Eintrittsbereich insbesondere auch auf die Geradrohre zu reduzieren. Damit werden auch die nicht direkt vom Kühlfluid umströmten Bereiche des Geradrohrs vor unerwünscht hoher Temperaturbelastung geschützt. Die thermische Isolationseinrichtung ist somit erfindungsgemäß in der Weise ausgebildet, dass sie die Geradrohre im Bereich der Eintrittsrohrscheibe, d.h. insbesondere in denjenigen Abschnitten, in denen die Eintrittsrohrscheibe in Radialrichtung der Längsachse des jeweiligen Geradrohrs neben dem Geradrohr liegt, in Radialrichtung nach außen thermisch isoliert und dadurch die radiale Wärmeübertragung zwischen in die Geradrohre einströmendem, primären Fluid und Rohr und damit auch zwischen Rohr und Rohrscheibe in diesem Bereich stark verringert. Wesentlich ist somit, dass die thermische Isolationseinrichtung die Innenseite des Geradrohrs wenigstens im Bereich der Eintrittsrohrscheibe gegenüber dem einströmenden primären Fluid thermisch schützt. Entsprechend ist die thermische Isolationseinrichtung insbesondere auch in diesem Bereich innerhalb des Geradrohrs angeordnet und verhindert somit, insbesondere vollständig, einen direkten physischen Kontakt zwischen dem einströmenden zu kühlenden Fluid und der Innenwandung des Geradrohrs. Dadurch werden nicht nur die Rohre vor einer Überhitzung durch das in die Geradrohre einströmende zu kühlende primäre Fluid geschützt, sondern auch die Temperaturverteilung innerhalb der Rohrscheibe fällt wesentlich homogener und im durchschnittlichen Gesamttemperaturniveau geringer aus.

Die konkrete strukturelle und konstruktive Ausbildung der thermischen Isolationseinrichtung kann variieren, solange die vorstehend genannten Wirkungen, insbesondere die thermische Isolationswirkung zwischen dem in die Geradrohre einströmenden primären Fluid und dem Geradrohr an sich, zumindest im Bereich auf Höhe der Eintrittsrohrscheibe zur thermischen Entlastung des Geradrohrs im in der Eintrittsrohrscheibe gelagerten Bereich durch die thermische Isolationseinrichtung sichergestellt ist. Als besonders vorteilhaft hat sich die Ausbildung der thermischen Isolationseinrichtung umfassend eine Hülse, die wenigstens im Bereich auf Höhe der Eintrittsrohrohrscheibe angeordnet ist und in das Geradrohr von der Eintrittsseite des primären Fluids her eingesteckt ist, erwiesen. Die erfindungsgemäß in zumindest einem Geradrohr und vorzugsweise in allen Geradrohren angeordnete Hülse stellt entweder selbst einen in Radialrichtung wirkenden thermischen Isolator oder einen Träger für einen Isolator in diesem Bereich dar, um so eine radiale Wärmeübertragung zwischen dem in die Rohre eintretenden Fluid und den Rohren und sukzessive zwischen den Rohren und der Rohrscheibe zu vermeiden bzw. zumindest deutlich zu verringern. Hierdurch werden thermische Spannungen in der Rohrscheibe effektiv und auf einfache Weise vermieden oder zumindest deutlich verringert, so dass keine Beschädigungen an der Eintrittsrohrscheibe auftreten und der Rohrbündelwärmetauscher insbesondere auch dann seine volle Funktionalität beibehält, wenn der Temperaturunterschied zwischen dem primären Fluid und dem sekundären Fluid, insbesondere im Eintrittsbereich der Rohrscheibe, verhältnismäßig drastisch ausfällt (beispielsweise größer 200 K). Die Anordnung der Hülse erfolgt somit in der Weise, dass sie innerhalb des wenigstens einen Geradrohrs wenigstens in demjenigen Abschnitt des Geradrohrs steckt, der durch die Rohrscheibe verläuft, wobei die Hülse selbstverständlich in Richtung zu einer oder beiden Seiten der Eintrittsrohrscheibe innerhalb des Rohres auch über den Bereich der Rohrscheibe in Längsrichtung des Rohres vorstehen kann. In diesem Bereich strömt das in den Rohren geführte Fluid somit nicht unmittelbar an der Rohrinnenwand entlang, sondern durch die im Inneren des Rohres angeordnete Hülse und/oder durch den durch die Hülse gehaltenen Isolator hindurch. Das Fluid wird in diesem Bereich somit zur Rohrinnenwand durch die Hülse und/oder durch den durch die Hülse gehaltenen Isolator in Radialrichtung beabstandet geführt, so dass eine Wärmeübertragung in Radialrichtung vom Inneren des Rohres zur Rohrscheibe vermindert oder sogar im Wesentlichen unterbunden ist. Dadurch wird die thermische Belastung der Rohrscheibe effizient und auf baulich vergleichsweise einfache Art und Weise vermindert. Darüber hinaus eignet sich die Erfindung hervorragend zur Nachrüstung bestehender Systeme, wobei die Hülsen dann entsprechend beschaffen sein müssen, dass sie vom jeweiligen Rohrende kommend bis auf die Höhe der Rohrscheibe in diese eingeschoben und anschließend fixiert werden können. Die Radialrichtung bezieht sich dabei auf die Richtung quer zur Längsmittelachse des jeweiligen Geradrohrs.

Gemäß einer bevorzugten Ausführungsform ist die Hülse zu wenigstens einem Außenrand hin in Axialrichtung der Hülse abgeflacht ausgebildet und weist einen sich vergrößernden Innendurchmesser auf. Die durch die im Rohr steckende Hülse auftretenden Querschnittsveränderungen verlaufen dadurch gleichmäßig und rampenartig, so dass beispielsweise durch abrupte Querschnittsveränderungen auftretende Druckanstiege und -abfälle reduziert werden und ein harmonischeres Strömungsverhalten innerhalb der Rohre trotz eingeführter Hülse möglich ist. Das Ausmaß der Querschnittsveränderung der Innenwandung der Hülse verläuft dabei idealerweise von einem kleineren Innendurchmesser, vorzugsweise mit gleichmäßiger Steigung, bis, soweit im Hinblick auf Bauteilstabilität möglich, nahezu zu einem mit dem Innendurchmesser der Innenwand des Geradrohrs identischen Innendurchmesser. Eine derartige sich zum Hülsenrand erstreckende Abflachung weist die Hülse besonders bevorzugt zu ihrem stromabwärts gelegenen Außenrand hin auf.

Gemäß einer weiteren bevorzugten Ausführungsform weist die Hülse zu wenigstens einem Außenrand hin einen in Radialrichtung vorstehenden Anschlagkragen auf, dessen Anschlagdurchmesser größer als der Innendurchmesser des zumindest einen Rohres und insbesondere auch größer als der Innendurchmesser einer Aufnahmeöffnung für das Geradrohr in der Eintrittsrohrscheibe ist. Durch diese Ausbildung passt die Hülse somit im Bereich ihres Anschlagkragens nicht in das Rohrinnere. Hierdurch können die Hülse und das Rohr gut relativ zueinander positioniert und fixiert werden und es kann durch bauliche Abstimmung der Länge der Hülse und der Größe des Anschlagkragens sichergestellt werden, dass die Hülse in ihrer Anschlagposition auch tatsächlich im Bereich der Eintrittsrohrscheibe positioniert ist. Ferner stellt der über den Rohreintritt radial vorstehende Anschlagkragen einen guten Ansatzpunkt für weitergehende Befestigungsmaßnahmen, beispielsweise Verschweißungen etc., dar, falls gewünscht und erforderlich. Der Anschlagkragen kann auch mehrstufig und beispielsweise getreppt ausgebildet sein und somit mehrere Abschnitte mit unterschiedlichem Außenumfang aufweisen. Die Stufen verlaufen dabei vorzugsweise in Durchströmungsrichtung der Hülse mit sich im Vergleich untereinander verkleinerndem Außenumfang.

Grundsätzlich ist möglich, die Hülse selbst bereits aus einem Material herzustellen, das schlechte Wärmeleitungseigenschaften aufweist und somit thermisch isolierend wirkt. Eine schlechte Wärmeleitfähigkeit im Sinne der vorliegenden Erfindung liegt vorliegend allgemein insbesondere dann vor, wenn die Wärmeleitfähigkeit bei 600°C zwischen 0,05 bis 0,2 W/mK liegt, wobei diese Bereichsangabe insbesondere lediglich erläuternd und nicht beschränkend zu verstehen ist. Selbstverständlich sind beispielsweise auch noch geringere Wärmeleitfähigkeiten mit umfasst. Bei dieser Ausführungsform wirkt die Hülse somit bereits selbst als Wärmeisolator. Allerdings sind die dafür im praktischen Einsatz in Frage kommenden Materialien, wie beispielsweise geeignete Keramiken, sehr teuer und/oder in der praktischen Handhabung kompliziert. Vorzugsweise wird die Hülse daher mit einem zusätzlichen Isolationsmaterial kombiniert verwendet. Die Hülse dient dann ergänzend oder alternativ primär als Befestigungsmittel eines Isolationsmaterials im Rohrinneren. Dazu weist die Hülse beispielsweise im Bereich zwischen ihren Außenrändern in Längs- bzw. Axialrichtung eine in Axialrichtung verlaufende Ringaussparung im Innenmantel oder besonders bevorzugt im Außenmantel auf, über die zwischen insbesondere der Außenmantelfläche der Hülse und der Innenwandung des zumindest einen Geradrohrs ein Aufnahmehohlraum ausgebildet ist. Der Aufnahmehohlraum hat somit beispielsweise eine ringförmige, hohlzylindrische Form und wird zwischen der Außenwand der Hülse und der Innenwand der Rohres gebildet und ist in Längsrichtung der Hülse bevorzugt durch entsprechende Randwände der Hülse begrenzt. Dieser mit Luft gefüllte Raum kann bereits für sich als thermischer Isolator wirken. Dieser Aufnahmehohlraum erstreckt sich in Axialrichtung vorzugsweise wenigstens über die vollständige Dicke der Rohrscheibe beziehungsweise mit anderen Worten über den gesamten Bereich zwischen der in Strömungsrichtung des Fluids im Geradrohr liegenden Vorderseite und der Rückseite der Eintrittsrohrscheibe.

Bevorzugt weist die Hülse als Teil der thermischen Isolationseinrichtung zwischen ihrer Außenmantelwand und der Innenwandung des zumindest einen Rohres zusätzlich einen Isolator bzw. Isolationskörper, insbesondere im Bereich des Aufnahmehohlraums, auf. Bei dieser Ausführungsform ist somit ein zusätzliches Mittel vorgesehen, welches durch die Hülse selbst innerhalb des Rohres in Position auf Höhe der Eintrittsrohrscheibe gehalten wird. Dieses Mittel sollte vom Grundsatz her eine schlechte Wärmeleitfähigkeit aufweisen. Unter einem Isolator wird vorliegend somit eine Einrichtung verstanden, die gute wärmeisolierende Eigenschaften beziehungsweise eine schlechte Wärmeleitfähigkeit aufweist und somit eine Wärmeweiterleitung vom Rohrinneren zum Geradrohr und zur Rohrscheibe hin in Radialrichtung verhindert oder zumindest wesentlich reduziert. Der Isolator kann dabei einstückig aber auch mehrteilig sein. Ferner kommen hier grundsätzlich neben materialeinheitlichen Isolatoren auch verschiedene Materialien umfassende Isolatoren in Betracht. Wesentlich ist die Eignung des Isolators, durch die Hülse im Bereich der Rohrscheibe gehalten werden zu können und dessen Eigenschaft, eine Wärmeweiterleitung zu vermindern oder sogar weitestgehend zu verhindern.

Der Isolator kann dabei insbesondere ein Isolationskörper sein, welcher in dem zumindest einen Rohr durch die Hülse formschlüssig und/öder kraftschlüssig fixiert ist. Die Hülse übernimmt dabei somit im Wesentlichen eine Positionierungsfunktion und gewährleistet, dass der Isolator im Betrieb an der vorgesehenen Stelle auf Höhe der Eintrittsrohrscheibe im Inneren des Geradrohrs gehalten wird. Dazu ist die Hülse beispielsweise in der Weise ausgebildet, dass sie via Reibschluss zur Innenwandung des Rohres in ihrer Position gehalten wird. Der Isolator kann ferner beispielsweise selbst als Hülse oder zumindest hülsenartige Gesamtheit ausgebildet sein, die insbesondere in dem vorstehend beschriebenen Aufnahmefreiraum, beispielsweise der Ringaussparung, zwischen der Hülsenaußenseite und der Rohrinnenwandung lokalisiert ist.

Der Isolationskörper besteht vorzugsweise aus einem Material mit geringer Wärmeleitfähigkeit. Hier hat sich im praktischen Einsatz die Verwendung von ein- oder mehrlagigem, insbesondere keramischem, Isolationspapier als besonders geeignet herausgestellt. Ein solches Isolationspapier ist einerseits flach und kann damit gut in den Bereich zwischen Hülse und Rohr eingebracht werden. Darüber hinaus weist es andererseits gute Wärmeisolationseigenschaften auf. Bei einem Isolationspapier handelt es sich insbesondere um ein Keramikfaserpapier, umfassend feuerfeste, keramische Fasern, besonders bevorzugt mit einer Richtanalyse von 45 - 60% SiO₂ und 40 - 55% Al₂O₃.Die Prozentangaben sind dabei insbesondere als % [m/m] zu verstehen.

Vorzugsweise ist der Isolationskörper in seiner räumlichen Beschaffenheit auf die Hülse abgestimmt ausgebildet, beispielsweise in der Weise, dass er an der Innenwandung des zumindest einen Rohres und/oder an der Außenwandung der Hülse zumindest teilweise ebenfalls formschlüssig und/oder kraftschlüssig anliegt. Es ist bevorzugt, wenn der Isolationskörper insbesondere den Freiraum zwischen der Außenseite der Hülse und der Innenwandung des Rohres möglichst vollständig ausfüllt, um einen maximalen Isolationseffekt in Radialrichtung zur Rohrscheibe hin zu erzielen.

Vorteilhafterweise bedeckt der Isolationskörper die Innenwandung des zumindest einen Rohres wenigstens im Bereich des in der Eintrittsrohrscheibe angeordneten Rohrbereiches des jeweiligen Geradrohrs, um gerade hier eine Wärmeleitung in Radialrichtung zu blockieren und ein Auftreten thermischer Spannungen effektiv zu verhindern. Der Isolationskörper bedeckt die Innenwandung des zumindest einen Geradrohrs somit bevorzugt wenigstens im Bereich auf Höhe der Eintrittsrohrscheibe. Die Hülse und der Isolationskörper sind zueinander somit in der Weise ausgebildet, dass sich zumindest der Isolationskörper über die gesamte Dicke der Rohrscheibe in Längsrichtung des Rohres erstreckt. Dabei ist es auch möglich, dass der Isolationskörper und entsprechend auch die Hülse wesentlich länger ausgebildet sind als erforderlich ist, um sicherzustellen, dass auf Höhe der Eintrittsrohrscheibe auf jeden Fall im Inneren des jeweiligen Geradrohrs ein Isolationskörper angeordnet ist. Allerdings ist es gleichzeitig bevorzugt, die Größe und das Ausmaß der Gesamtheit aus Hülse und Isolationskörper so klein wie möglich zu gestalten, um den durch die Hülse hervorgerufenen Strömungswiderstand möglichst gering zu halten.

Vorzugsweise ragt die thermische Isolationseinrichtung ferner aus dem Geradrohr in Richtung des Einlassbereiches vor der Eintrittsrohrscheibe hervor. Es ist bei dieser Ausführungsform somit vorgesehen, dass die thermische Isolationseinrichtung teilweise aus dem Geradrohr vorsteht und in diesem Bereich eine Wärmeübertragung direkt auf die Rohrscheibe in Radialrichtung vermindert. Ferner kann die thermische Isolationseinrichtung in ihrem Eintrittsbereich auch einen Isolationskragen aufweisen, der sich in Radialrichtung zur Längsachse der Geradrohre umlaufend erstreckt und oberflächlich auf der Eintrittsseite der Eintrittsrohrscheibe oder eines nachstehend noch näher beschriebenen Hitzeschildes aufliegt. Dadurch wird auch eine Wärmeübertragung von dem die Eintrittsrohrscheibe frontal anströmenden primären Fluid vermindert.

Um nun die Wärmebelastung, insbesondere der Eintrittsrohrscheibe, weiter zu senken, umfasst der Rohrbündelwärmetauscher erfindungsgemäß einen der Eintrittsrohrscheibe in Strömungsrichtung des primären Fluids (insbesondere zu kühlender Gasturbinenkühlluft) vorgelagerten Hitzeschild. Die wesentliche Aufgabe dieses Hitzeschildes liegt darin, die Stirnseite der Eintrittsrohrscheibe und damit die Eintrittsrohrscheibe an sich vor einer unerwünschten Wärmeübertragung durch eine direkte Anströmung des primären Fluids zu schützen. Der Hitzeschild ist dabei in Bezug auf die Strömungsrichtung des zu kühlenden Fluids stromaufwärts der Eintrittsrohrscheibe vorgelagert. Dadurch nimmt die Eintrittsrohrscheibe im Betrieb eine deutliche niedrigere Mitteltemperatur an, da der Hitzeschild den Wärmeeintrag von der Einströmseite her nahezu blockiert oder zumindest drastisch senkt und gleichzeitig eine Kühlung der Eintrittsrohrscheibe von ihrer dem Druckbehälterinneren zugewandten Innenseite erfolgt. Dort steht die Eintrittsrohrscheibe mit dem sekundären Fluid, insbesondere Wasser zu Kühlzwecken, in direktem Kontakt. Spannungen, Verformungen und resultierende Schädigungen der Eintrittsrohrscheibe können auf diese Weise erheblich reduziert werden.

Bevorzugt ist der erfindungsgemäße Rohrbündelwärmetauscher nun derart ausgebildet, dass sich die Rohrenden der Geradrohre des Rohrbündelwärmetauschers von der Eintrittsrohrscheibe kommend nicht bis zur Außenseite des Hitzeschildes (die Außenseite bezeichnet dabei die der Eintrittsrohrscheibe abgewandte Seite des Hitzeschildes) erstrecken, sondern vorher, idealerweise innerhalb der Dicke der Eintrittsrohrscheibe, enden. Eine als Hülse ausgebildete thermische Isolationseinrichtung, sei es, dass sie selbst als thermischer Isolator wirkt, und/oder als Befestigungsmittel für einen thermischen Isolator wirkt, kann dabei bevorzugt nun in der Weise ausgebildet sein, dass sie sich vom Eintrittsbereich des Hitzeschildes bis zum stromabwärts hinter der Rohrscheibe liegenden Bereich erstreckt. Die Hülse steht bei dieser Ausführungsform somit in Richtung des Hitzeschildes aus dem Geradrohr hervor. Dadurch kann das Geradrohr auch räumlich von dem in Strömungsrichtung des primären Fluids vor dem Hitzeschild liegenden und sich zum Teil vergleichsweise stark aufheizenden Bereich entfernt werden, so dass eine entsprechende Wärmeübertragung auch von daher vermindert wird.

Die konkrete Ausbildung des Hitzeschildes an sich kann ebenfalls variieren. Üblicherweise wird der Hitzeschild in seiner Gesamtheit eine plattenförmige Ausbildung aufweisen. Vorzugsweise umfasst der Hitzschild eine, ganz besonders vakuumgeformte, Keramikfaserplatte. Unter Keramikfasern werden vorliegend Fasern aus anorganischem, nicht metallischem Material verstanden. Vorliegend besonders bevorzugt sind dabei Fasertypen aus Aluminiumoxid oder Siliziumcarbid, insbesondere auch Mischfasern mit diesen Fasertypen. Bevorzugt weist die Keramikfaserplatte eine Richtanalyse von 45 - 60% SiO₂ und 40 - 55% Al₂O₃ auf. Die Prozentangaben sind dabei insbesondere als % [m/m] zu verstehen. Eine Keramikfaserplatte bezeichnet somit konkret eine insgesamt plattenartig ausgebildete Gesamtheit aus Keramikfasern, die einteilig aber auch mehrteilig sein kann. Plattenartig bedeutet, dass sich die Keramikfaserplatte in einer Ebene eine deutlich größere Erstreckung aufweist als senkrecht zu dieser Ebene. Dabei ist die Keramikfaserplatte idealerweise an der Eintrittsrohrscheibe flächig anliegend angeordnet.

Der Hitzeschild weist vorzugsweise zu den Geradrohren korrespondierende Durchgangsöffnungen auf. Dies bedeutet, dass jedem Geradrohr des Rohrbündelwärmetauschers eine individuelle Durchgangsöffnung im Hitzeschild zugeordnet ist. Die Durchgangsöffnungen stellen eine Strömungsverbindung zwischen dem in Strömungsrichtung des primären Fluids vor dem Hitzeschild liegenden Bereich und dem Innenraum der Geradrohre her. Die thermische Isolationseinrichtung ist dann entsprechend bevorzugt derart ausgebildet ist, dass sie sich von der der Eintrittsrohrscheibe abgewandten Seite bis auf Höhe der Eintrittsrohrscheibe in das jeweilige Geradrohr hinein erstreckt.

Idealerweise ist der Hitzeschild direkt an der Eintrittsrohrscheibe befestigt. Zur Befestigung des Hitzeschildes ist dazu eine geeignete Halteeinrichtung vorgesehen, die den Hitzeschild unmittelbar mit der Eintrittsrohrscheibe verbindet. Dadurch kann eine vergleichsweise kompakte Bauform und gleichzeitig eine effiziente Unterbindung der Wärmeübertragung realisiert werden. Die Halteeinrichtung ist dazu derart ausgebildet, dass sie die Keramikfaserplatte vor der Eintrittsrohrscheibe fixiert, insbesondere umfassend eine Vielzahl von Schraubverbindungen, Halteklammern und/oder Halteblechen.

Konkret kann die Halteeinrichtung derart ausgebildet sein, dass sie in ihrer Gesamtheit ringförmig entlang des Außenrandes der Eintrittsrohrscheibe angeordnet ist. Ergänzend oder alternativ können auch in der Fläche der Eintrittsrohrscheibe verteilt Elemente der Halteeinrichtung angeordnet sein. Wesentlich ist, dass die Halteeinrichtung eine stabile und zuverlässige Befestigung des Hitzeschildes an der Außenseite der Eintrittsrohrscheibe ermöglicht und gleichzeitig die Strömungsverbindung in die Geradrohre hinein nicht behindert.

Zur Befestigung kann beispielsweise auf entsprechende Schraubverbindungen zurückgegriffen werden, wobei auf der der Eintrittsrohrscheibe abgewandten Seite des Hitzeschildes vorzugsweise ergänzend geeignete, auch mehrteilige, Haltebleche vorhanden sind, die, vergleichbar einer Unterlegscheibe, ein Abrutschen des Hitzeschildes verhindern. Die Schraubverbindungen umfassen vorzugsweise ferner Stehbolzen, so dass ein Halteblech über diese Stehbolzen mit der Rohrscheibe verschraubbar ist. Wesentlich ist in diesem Zusammenhang ferner, dass die vorstehend genannten Hülsen und die Haltebleche möglichst dicht verbaut sind, um den Eintritt loser Fasern von den Keramikfaserelementen in die Rohre und/oder die Kammer zu verhindern.

In seiner baulichen Gesamtheit ist der Rohrbündelwärmetauscher zur Kühlung von Kühlluft von Gasturbinen in Gasturbinen- oder Gas-und-Dampfturbinen-Kraftwerken ausgelegt, insbesondere von zu kühlender Kühlluft mit Einströmtemperaturen von wenigstens 470 °C bis hin zu 550°C. Insbesondere bei diesen Anlagen sind die Rohrscheiben häufig extremen thermischen Belastungen ausgesetzt, so dass sich insbesondere dort die vorteilhaften Effekte besonders bemerkbar machen.

Ein erfindungsgemäßer Gasturbinenkühlluftkühler eignet sich besonders zur Kühlung von aufgewärmter Kühlluft einer Gasturbine in einem Gasturbinenkraftwerk oder einem Gas-und-Dampfturbinen-Kraftwerk.

Ein weiterer Aspekt der Erfindung liegt somit auch in einem Gasturbinenkraftwerk oder Gas-und-Dampfturbinen-Kraftwerk mit einem Gasturbinenkühlluftkühler gemäß den vorstehenden Ausführungen.

Schließlich betrifft die Erfindung auch ein Verfahren zum Kühlen von erwärmter Kühlluft unter Verwendung eines erfindungsgemäßen Gasturbinenkühlluftkühlers, speziell in einem erfindungsgemäßen Gasturbinenkraftwerk oder Gas-und-Dampfturbinen-Kraftwerk.

Nachstehend wird die Erfindung anhand der in den Figuren dargestellten Ausführungsbeispiele näher erläutert. Es zeigen schematisch:
- Fig. 1: eine Schnittansicht durch einen Rohrbündelwärmetauscher;
- Fig. 2: eine Draufsicht auf den Bereich B aus Fig. 1;
- Fig. 3: eine Seitenansicht auf einen Gasturbinenkühlluftkühler;
- Fig. 4: einen Längsschnitt durch den Bereich B aus Fig. 1 und Fig. 3;
- Fig. 5: eine Ausschnittsvergrößerung des Bereiches A aus Fig. 4;
- Fig. 6: eine Draufsicht auf die Hülse aus Fig. 5;

- Fig. 7: eine Querschnittsansicht entlang der Linie A-A durch die in Fig. 6 dargestellte Hülse; und
- Fig. 8: einen in Form einer Hülse ausgebildeten Isolator aus einem Isolationspapier.

Gleiche und funktionsgleiche Bauteile sind in den Figuren auch bei verschiedenen Ausführungsformen mit gleichen Bezugszeichen angegeben.

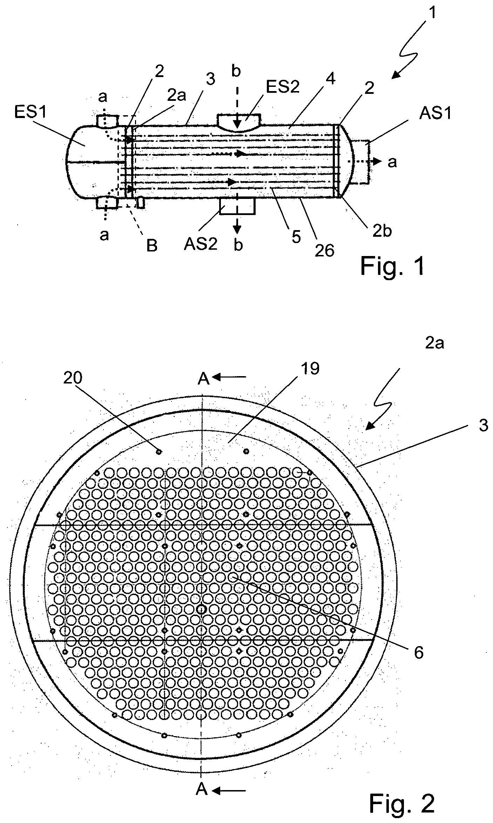

Fig. 1 zeigt eine Querschnittsansicht eines gattungsgemäßen Rohrbündelwärmetauschers 1. Dessen wesentliche Elemente sind ein von einer Wand eines Außenmantels 3 umgebener Innenraum 4 eines Druckbehälters 26, von einer Eintrittsseite ES1 eines primären und zu kühlenden Fluids zu einer Austrittsseite AS1 des primären Fluids verlaufende Geradrohre 5, die im Anfangs- und Endbereich jeweils in einer Rohrscheibe 2 gelagert sind, sowie eine Eintrittsseite ES2 und eine Ausstrittsseite AS2 eines sekundären Fluids (insbesondere Kühlwasser), das innerhalb des Innenraums 4 an der Außenseite der Geradrohre 5 entlang strömt. Die Geradrohre bestehen aus einem ferritischem, nicht rostendem Stahl, im vorliegenden Ausführungsbeispiel konkret einem Stahl mit der Werkstoffnummer 1.4510 (nach DIN EN 10088-1:2005) oder TP439 (ASME). Der Außenmantel 3 besteht im vorliegenden Ausführungsbeispiel aus dem nicht legierten Stahl P355NH (DIN EN 10028-3). Das primäre Fluid (wobei es sich hierbei insbesondere um zu kühlende Luft handelt) strömt in Pfeilrichtung a von der Eintrittsseite ES1 vor der Rohrscheibe 2 (dieser Bereich wird auch als Vorkammer 25 oder Luftkammer bezeichnet; diese Rohrscheibe wird auch als Eintrittsrohrscheibe 2a bezeichnet) verteilt in die Geradrohre 5 ein, wird innerhalb dieser Geradrohre 5 durch den Innenraum 4 des Druckbehälters 26 geführt und tritt über die weitere, stromabwärts gelegene Rohrscheibe 2 (Austrittsrohrscheibe 2b) über den Austrittsbereich AS1 aus. Das sekundäre Fluid (insbesondere Wasser) strömt dagegen in Pfeilrichtung b durch den den Innenraum 4 des Druckbehälter 26 des Rohrbündelwärmetauschers 1 durch die zweite Eintrittsseite ES2 in den Innenraum 4, umströmt die Außenseite der Geradrohre 5 (auch als Mantelseite bezeichnet) und verlässt den Innenraum 4 über die zweite Ausströmseite AS2. Im Innenraum 4 wird Wärme zwischen den beiden Fluiden übertragen, konkret wird das primäre Fluid abgekühlt und das sekundäre Fluid erwärmt.

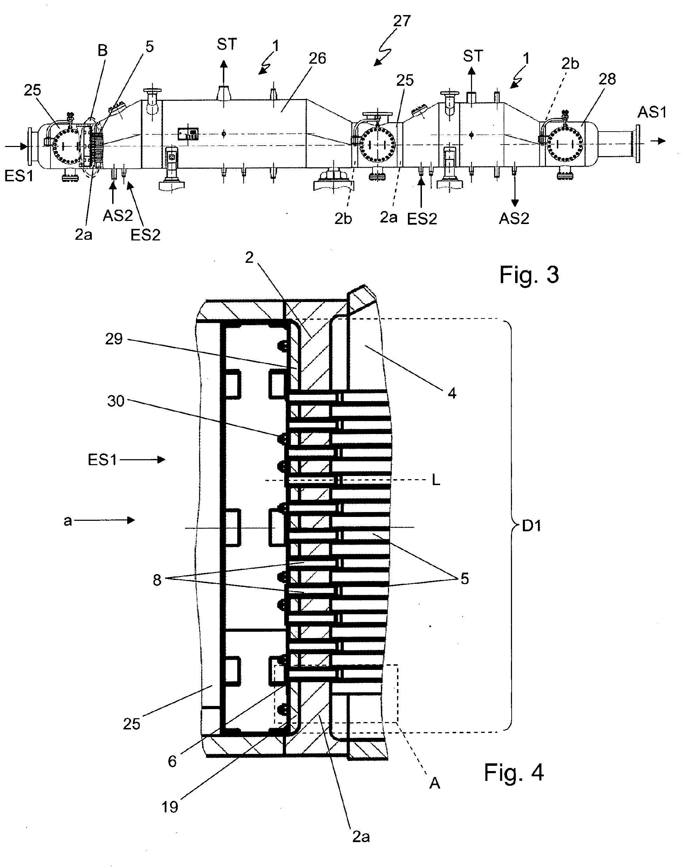

Fig. 2 ist eine Draufsicht auf den gestrichelt umrahmten Bereich B aus Fig. 1 in Strömungsrichtung a des primären Fluids gesehen. Fig. 4 ist eine Vergrößerung der Querschnittsansicht dieses Bereichs. Fig. 2 verdeutlicht den Aufbau eines nachstehend noch näher beschriebenen Hitzeschildes, der der Eintrittsrohrscheibe 2a stromaufwärts in Strömungsrichtung des primären Fluids vorgelagert ist.

Fig. 3 veranschaulicht schematisch den Aufbau eines zweistufigen Gasturbinenkühlluftkühlers 27 (oder auch eines zweistufigen Prozessgaskühlers) mit zwei in Reihe angeordneten Rohrbündelwärmetauschern. Die zu kühlende Luft tritt über ES1 in den Gasturbinenkühlluftkühler 27 ein, passiert die Vorkammer 25 des ersten Rohrbündelwärmetauschers 1, strömt die Eintrittsrohrscheibe 2a des ersten Rohrbündelwärmetauschers 1 an und wird auf die Vielzahl der Geradrohre 5 verteilt, passiert den ersten Druckbehälter 26 und strömt über die nur schematisch angedeutete Austrittsrohrscheibe 2b in eine zweite Vorkammer 25 des zweiten Rohrbündelwärmetauschers 1. In der Draufsicht in Strömungsrichtung des primären Fluids (der zu kühlenden Kühlluft) entspricht die Rohrscheibe 2a der in Fig. 2 angegebenen Anordnung. Von der zweiten Vorkammer 25 aus erfolgt eine erneute Aufteilung der Kühlluft über die Eintrittsrohrscheibe 2a (nur schematisch dargestellt) des zweiten Rohrbündelwärmetauschers 1 mit den im Wesentlichen gleichen Elementen wie der erste Rohrbündelwärmetauscher 1. Allerdings sind hier die nachstehend näher beschriebenen konstruktiven Maßnahmen zum Hitzeschutz der Geradrohre 5 nicht unbedingt erforderlich. Die über die Austrittsrohrscheibe 2b austretende, gekühlte Luft wird in der Luftkammer 28 vereinigt und tritt anschließend in Richtung AS1 über einen nicht näher bezeichneten Auslassstutzen aus und wird anschließend zur Kühlung einer Gasturbine als Teil eines Gasturbinenkraftwerks verwendet (in den Figuren nicht dargestellt). Für die vorliegende Erfindung besonders relevant ist dabei die Ausgestaltung des Bereiches der ersten Eintrittsrohrscheibe 2a des in Strömungsrichtung des primären Fluids gesehen ersten Rohrbündelwärmetauschers 1. Ferner umfasst der Gasturbinenkühlluftkühler 27 aus Fig. 3 für jeden Rohrbündelwärmetauscher 1 jeweils einen Kühlwassereingang ES2 und einen Kühlwasserausgang AS2. Das Kühlwasser ist das sekundäre Fluid. Sofern der Rohrbündelwärmetauscher 1 bevorzugt als Verdampfer genutzt wird, umfasst der Rohrbündelwärmetauscher an den beiden Druckbehältern 26 jeweils einen Dampfauslass ST, über den erzeugter Dampf entweder beispielsweise in Abhitzekessel abgeführt oder auch als Prozessdampf weiteren Anwendungen zugeführt werden kann. Die Austritte AS2 sind dann nicht erforderlich und fallen weg, da dass Kühlwasser vollständig verdampft wird. In der Fig. 3 sind lediglich zur Klarstellung sowohl die Austritte AS2 und die Dampfaustritte ST gleichzeitig dargestellt.

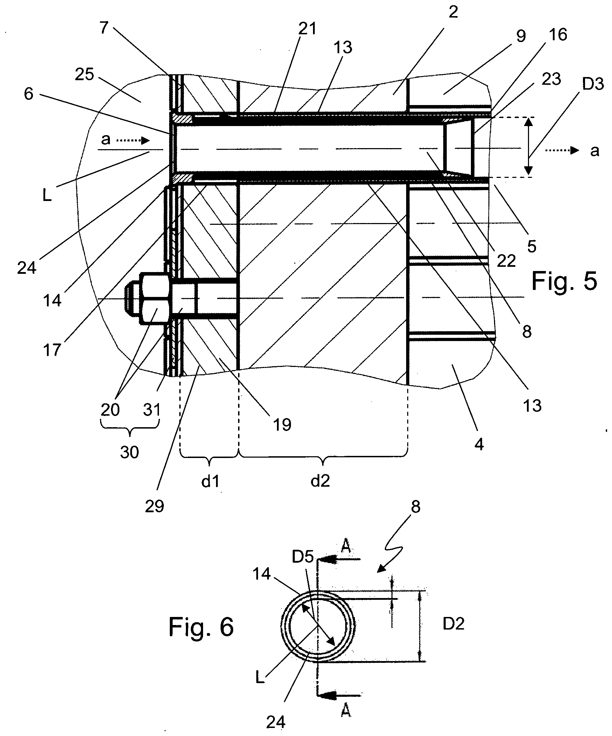

Die Rohrscheiben 2a und 2b und die Außenwand 3 definieren jeweils zusammen einen Innenraum 4, der von einer Vielzahl von Geradrohren 5, welche endseitig jeweils in beide Rohrscheiben 2a und 2b hineinragen, durchlaufen wird. Die Geradrohre 5 verlaufen dabei jeweils gradlinig entlang einer Längsachse L (Fig. 5). Die Geradrohre 5 werden im Arbeitsbetrieb von dem primären Fluid (insbesondere zu kühlender Gasturbinenkühlluft) in Richtung von der Eintrittsrohrscheibe 2a zur Austrittsrohrscheibe 2b durchströmt. Der von der hohlzylindrisch ausgebildeten Außenwand 3 umschlossene Innenraum 4 wird von dem zweiten Fluid (beispielsweise Wasser) durchströmt. Beim Durchströmen des Rohrbündelwärmetauschers 1 durch die beiden Fluide unterschiedlicher Temperatur kühlt das heißere der beiden Fluide (üblicherweise das primäre Fluid) ab und das kältere der beiden Fluide (üblicherweise das sekundäre Fluid) wird erwärmt. Um dabei thermische Spannungen sowohl in den Geradrohren 5 als auch in den Rohrscheiben 2, insbesondere der Eintrittsrohrscheibe 2a und dem gesamten Gasturbinenkühlluftkühler zu verhindern oder zumindest zu vermindern, sind unter anderem in den Geradrohrenden im Bereich der Eintrittsrohrscheibe 2a thermische Isolationseinrichtungen, konkret in Form von Hülsen, angeordnet, welche nachstehend näher in Zusammenhang mit Fig. 5 beschrieben werden.

Fig. 4 verdeutlicht nun den Aufbau des Eintrittsbereiches B des Rohrbündelwärmetauschers 1, insbesondere auf Höhe der Eintrittsrohrscheibe 2a aus den Figuren 1 und 3. Auf Höhe der Eintrittsrohrscheibe 2a bezeichnet dabei den Bereich innerhalb der Dicke d2 (Fig. 5) der Eintrittsrohrscheibe 2a in Strömungsrichtung a. In Strömungsrichtung a des primären Fluids (beispielsweise der zu kühlenden Kühlluft des in Fig. 3 angegebenen Gasturbinenkühlluftkühlers 27) ist der Rohrscheibe 2a zunächst stromaufwärts auf ihrer Vorderseite 7 ein Hitzeschild 19 vorgelagert. Dieses scheibenartig ausgebildete Element weist eine Dicke d1 auf. Wesentliche Elemente des Hitzeschildes 19 sind eine Keramikfaserplatte 29 und eine Halteeinrichtung 30, über die die Keramikfaserplatte 29 an der Eintrittsseite der Eintrittsrohrscheibe 2a befestigt ist. Die Halteeinrichtung 30 umfasst Haltebolzen 20 und Halteplatten 31. Die Halteplatten 31 liegen auf der Außenoberfläche der Keramikfaserplatte 29 auf und werden zusammen mit der Keramikfaserplatte 29 von den Haltebolzen 20 durchlaufen, die in der Eintrittsrohrscheibe 2a befestigt sind. Die Keramikfaserplatte 29 liegt direkt an der Außenoberfläche der Eintrittsrohrscheibe 2a an. Der Hitzeschild 19 stellt insgesamt somit eine thermische Schutzeinrichtung für insbesondere die Vorderseite 7 der Rohrscheibe 2 dar. Das primäre Fluid strömt auf diese Weise nicht direkt auf die Außenoberfläche der Eintrittsrohrscheibe 2a. Der Hitzeschild 19 erstreckt sich vollflächig mit dem Durchmesser D1 über den gesamten in Strömungsrichtung a liegenden Bereich der Eintrittsrohrscheibe 2a.

Über die Fläche des Hitzeschildes 19 verteilt angeordnet sind Aufnahmeöffnungen 6 vorhanden, durch die hindurch in die Geradrohre 5 eingesteckte Hülsen 8, die als thermische Isolationseinrichtungen fungieren, von der Rohrscheibe 2 kommend bis zur Außenoberfläche des Hitzschildes 19 ragen. Der Aufbau und die Funktionsweise dieser thermischen Isolationseinrichtungen wird nachstehend näher erläutert.

In Strömungsrichtung des ersten Fluids ist stromabwärts zum Hitzeschild 19 die Eintrittsrohrscheibe 2a angeordnet und begrenzt den Innenraum 4 des Rohrbündelwärmetauschers 1. Auch die Eintrittsrohrscheibe 2a erstreckt sich über den gesamten Innenraum 4 des Rohrbündelwärmetauschers 1. Die Rohrscheiben 2 sind ein wesentliches Tragelement für die Vielzahl der Geradrohre 5 in deren Anfangs- (Eintrittsrohrscheibe 2a) und Endbereich (Austrittsrohrscheibe 2b). In den Rohrscheiben 2 sind der Anzahl der Geradrohre 5 entsprechend eine Vielzahl von Durchgangsbohrungen 21 vorhanden, die sich in Strömungsrichtung a des ersten Fluid senkrecht zu den stirnseitigen Oberflächen der Rohrscheibe 2 entlang der Längsachse L erstrecken. Jeder der Durchgangsbohrungen 21 der in Fig. 2 Draufsicht auf die Eintrittsrohrscheibe 2a ist somit jeweils ein Geradrohr 5 des Rohrbündelwärmetauschers 1 zugeordnet.

Um die Temperaturübertragung innerhalb der Dicke d2 der Rohrscheibe 2 zu vermindern, d.h. eine Wärmeübertragung aus dem Rohrinneren 22 des Geradrohrs 5 in Radialrichtung zur Längsachse L der Durchgangsbohrung 21, ist im Rohrinneren nun die thermische Isolationseinrichtung in Form einer Hülse 8 angeordnet, die sich im Rohrinneren 22 in Strömungsrichtung a vom Hitzeschild 19 bis über die Dicke d2 der Rohrscheibe 2 und darüber hinaus erstreckt. Durch die Dicke d1 (Hitzeschild 19) und auch durch die Dicke d2 (Eintrittsrohrscheibe 2a) wird das erste Fluid somit durch die Hülsen 8 und nicht in direktem Kontakt zu den Geradrohren 5 geführt. Die Geradrohre 5 ragen dabei bevorzugt gerade nicht bis zur Vorkammer 25, sondern vorliegend nur bis ca. zur vom Hitzschild abgedeckten Außenoberfläche der Eintrittsrohrscheibe 2a.

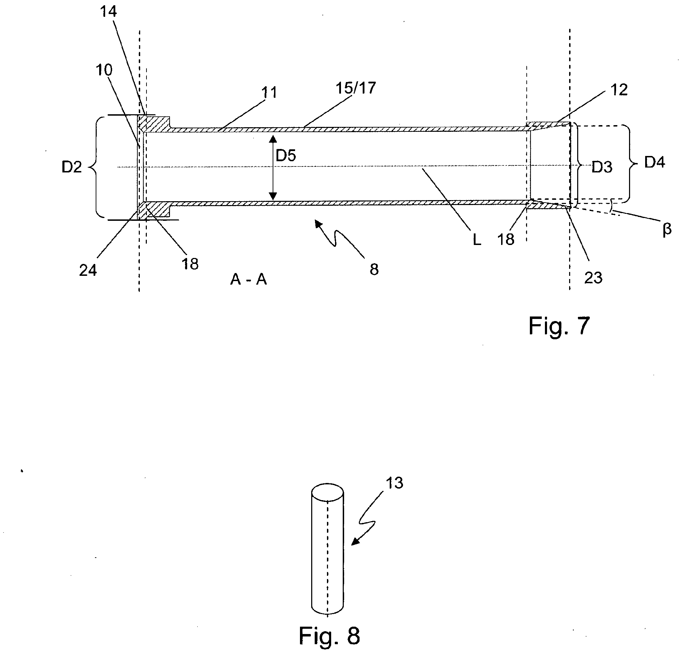

Der konkrete Aufbau der Hülse 8 an sich ergibt sich insbesondere aus den Figuren 6 und 7. In ihrer Gesamtform ist die Hülse 8 im Wesentlichen ebenfalls als ein hohlzylinderförmiger Körper aufgebaut. Dabei umfasst die Hülse 8 in Durchströmungsrichtung a aufeinander folgend den vorliegend mehrstufig ausgebildeten Abstützbereich 10, den Isolationsbereich 11 und den Abstützbereich 12. Der Isolationsbereich 11 ist zur Aufnahme eines thermischen Isolators 13 vorgesehen, bei dem es sich im vorliegenden Ausführungsbeispiel gemäß Fig. 8 um ein zur Hülse gerolltes Isolationspapier handelt. Der thermische Isolator 13 wird durch die Hülse 8 im Rohr 5 in der nachstehend noch näher beschriebenen Weise eingeklemmt und gehalten.

Im Abstützbereich 10 weist die Hülse 8 einen in Radialrichtung nach außen vorstehenden Abstützkragen 14 auf. In diesem Bereich hat die Hülse 8 einen Durchmesser D2, der größer als der Innendurchmesser D3 der Geradrohre 5 ist. Wenn die Hülse 8 somit stirnseitig in das Geradrohr 5 eingeschoben wird, schlägt sie in Einschubrichtung mit dem Abstützkragen 14 gegen die Halteplatte 31 an und wird dadurch an einem weiteren Hineinschieben in das Geradrohr 5 formschlüssig gehindert (Fig. 5). Auf diese Weise kann eine exakte Positionierung der Hülse relativ zur Eintrittsrohrscheibe 2a im Geradrohr 5 sichergestellt werden.

Der Isolationsbereich 11 zeichnet sich beim vorliegenden Ausführungsbeispiel der Hülse 8 im Wesentlichen durch eine am Außenumfang der Hülse verlaufende Ringaussparung 15 aus. Die Aussparung umläuft die Hülse 8 dabei zwischen der Abstützbereichen 10 und 12. Die Hülse ist mit anderen Worten bezüglich ihres Außenmantels mit einem kleineren Außendurchmesser D4 als der Innendurchmesser D3 des Rohres 5 ausgebildet. Dadurch wird ein definierter Hohlraum 17 zwischen der Außenseite der Hülse 8 und der Innenwandung 16 des Rohres 5 erhalten, der die Form eines Hohlzylinders aufweist. Von diesem Raum wird der Isolator 13 aufgenommen, so dass im Bereich der Rohrscheibe 2 von der Längsachse L des Rohres 5 aus in Radialrichtung nach außen der folgende Aufbau erhalten wird: primäres Fluid - Hülse 8 - Isolator 13 - Geradrohr 5 - Eintrittsrohrscheibe 2a. Dies verdeutlicht, dass die Wärmeübertragung vom ersten Fluid in Richtung der Rohrscheibe 2a durch den Isolator 13 im Bereich der Dicke d2 der Eintrittsrohrscheibe 2a gemindert wird, so dass die thermische Belastung der Rohrscheibe 2 an dieser Stelle erheblich geringer ausfällt, als bei bisher im Stand der Technik vorhandenen Anordnungen.

In Strömungsrichtung a schließt sich an den Isolationsbereich 11 schließlich der weitere Abstützbereich 12 an. In diesem Bereich weist die Hülse einen Durchmesser D3 entsprechend dem Rohrinnendurchmesser des Rohres 5 auf, so dass sich die Hülse an dieser Stelle an der Rohrinnenwand des Rohres 5 formschlüssig und, je nach Ausführungsform, kraftschlüssig abstützt. Der Hohlraum 17 wird somit stromaufwärts und stromabwärts durch diese Abstützbereiche 10 und 12 begrenzt, wobei hier jeweils entsprechende Randwände 18 vorhanden sind.

In ihrer Gesamtheit ist die Hülse 8 somit einerseits in das Innere des Rohrs 5 von der Öffnungsseite kommend einschiebbar ausgebildet. Die Hülse 8 kann somit in das Rohr hineingeschoben werden. Andererseits ist gleichzeitig durch den Abstützkragen 14 gewährleistet, dass die Hülse 8 nur bis zu einem bestimmten Ausmaß in das Rohr 5 eingeschoben werden kann. Ein wesentlicher Aspekt der Erfindung liegt somit insbesondere auch in der Abstimmung der beiden Abstützbereiche 10 und 12 in der vorstehend beschriebenen und in den Figuren näher veranschaulichten Weise.

Wesentlich an der Ausbildung der Hülse im Bereich 12 ist ferner, dass sie stromabwärts mit ihrer Innenmantelfläche in Richtung der Außenmantelfläche zum Außenrand 23 hin abgeflacht beziehungsweise zur Außenmantelfläche hin spitz zulaufend ausgebildet ist. Im Querschnitt verläuft die Innenmantelfläche der Hülse somit in einem spitzen Winkel β zur Außenmantelfläche der Hülse 8. Dadurch erfolgt der Übergang vom Innendurchmesser D5 der Hülse zum Innendurchmesser D3 der Rohres 5 in Strömungsrichtung nicht sprunghaft sondern gleichmäßig über den Bereich der Abflachung.

Die Schnittansicht in Fig. 5 betrifft somit die in das Rohr eingesetzte Hülse 8 mit Isolator 13 bei einer Ausführungsform mit Hitzeschild 19. Wie in Fig. 5 verdeutlicht, erstreckt sich die Hülse 8 in der Weise entlang der Längsachse L des Geradrohrs 5, dass sie sich im in das Geradrohr 5 eingeschobenen Zustand von der stromaufwärts liegenden Stirnseite des Hitzeschildes 19 bis zur Rückseite 9 der Eintrittsrohrscheibe erstreckt.

Durch den Hitzeschild 19 ist die direkte Wärmeübertragung vom ersten Fluid durch auf die Vorderseite 7 der Rohrscheibe 2 strömendes erstes Fluid nahezu vollständig eliminiert. Durch die in den Geradrohren auf Höhe der Eintrittsrohrscheibe 2a befindlichen thermischen Isolationseinrichtung 8 ist dagegen eine direkte Wärmeübertragung vom im Geradrohr 5 befindlichen Fluid auf das Geradrohr 5 in diesem Bereich erheblich vermindert oder sogar ebenfalls praktisch eliminiert. Dies hat zur Folge, dass die thermische Belastung des Geradrohrs 5 im Einströmbereich des zu kühlenden Fluids und im Bereich der Dicke der Eintrittsrohrscheibe 2a wesentlich verringert ist. Dadurch ist es möglich, die Konzessionstemperatur der Geradrohre 5 zu senken, so dass insgesamt auch für Temperaturen des zu kühlenden Fluids (insbesondere aufgeheizte Kühlluft eines Gasturbinenkühlluftkühlers) von größer 450 °C und maximal bis zu 550 °C auf Geradrohre aus ferritischem, nicht rostendem Stahl, insbesondere einem Stahl, wie er im vorstehenden Teil der Beschreibung als besonders bevorzugt herausgestellt wurde, speziell 1.4510 (DIN EN) oder TP439 (ASME) zurückgegriffen werden kann. Diese Stähle zeichnen sich durch bessere (sprich kleinere) Wärmeausdehnungskoeffizienten gegenüber bisher in diesem Zusammenhang eingesetzten austenitischen Stählen, wie beispielsweise 1.4301 (DIN EN) aus, und sind gleichzeitig wesentlich resistenter gegenüber SRK. Im Endergebnis führt dies dazu, dass bei dem in Fig. 3 gezeigten Gasturbinenkühlluftkühler vollständig auf sogenannte Mantelkompensatoren verzichtet werden kann. Diese Mantelkompensatoren, die bisher typischerweise im Bereich zwischen den beiden Rohrbündelwärmetauschern 1 und im Bereich der Austrittsluftkammer 28 angeordnet waren, dienten zum Ausgleich von Längsspannungen innerhalb des Gasturbinenkühlluftkühlers, die regelmäßig auf erheblich unterschiedliche Wärmeausdehnungskoeffizienten der verwendeten Materialien, insbesondere für den Druckbehälter und die Geradrohre, zurückzuführen waren. Die vorliegende Materialauswahl für die Geradrohre 5 und den Druckbehälter 26 verringert diese Längsspannungen derart, dass entsprechende Mantelkompensatoren nicht mehr erforderlich sind. Gleichzeitig wird durch die spezielle Ausbildung der thermischen Isolationseinrichtung und der Ausbildung des Hitzeschildes eine thermische Entlastung der Geradrohre 5 und der Eintrittsrohrscheibe 2a erreicht, so dass auch primäre Fluide mit Eintrittstemperaturen im Bereich > 470 °C bis maximal 550°C erfolgreich und dauerhaft gekühlt werden können.

## Patentansprüche

1. Gasturbinenkühlluftkühler zur Kühlung von Kühlluft mit Einströmtemperaturen ab 470 °C in einer Gasturbine in einem Gasturbinenkraftwerk oder einem Gas- und Dampfturbinenkraftwerk, umfassend einen Rohrbündelwärmetauscher (1) in Geradrohrbauweise, der Rohrbündelwärmetauscher (1) umfassend
- einen Druckbehälter (26) mit einem, insbesondere im Wesentlichen hohlzylindrischen, Außenmantel (3), einer Eintrittsrohrscheibe (2a) und einer Austrittsrohrscheibe (2b), die zusammen einen Innenraum (4) des Druckbehälters (26) definieren,
- ein Geradrohrbündel mit einer Anzahl von Geradrohren (5), die in die Eintrittsrohrscheibe (2a) und die Austrittsrohrscheibe (2b) mündend angeordnet sind und durch den Innenraum (4) des Druckbehälters (26) verlaufen,
- einen Einlass (ES1), über den ein primäres, zu kühlendes Fluid zur Eintrittsrohrscheibe (2a) und von dort in die Geradrohre (5) geführt wird, und einen Auslass (AS1), über den das gekühlte primäre Fluid aus den Geradrohren (5) über die Austrittsrohrscheibe (2b) kommend abgeführt wird,
- einen Einlass (ES2), über den ein sekundäres Fluid zu Kühlzwecken in den Innenraum (4) eingeleitet wird, und einen Auslass (AS2), über den das sekundäre Fluid aus dem Innenraum (4) abgeleitet wird, wobei ein der Eintrittsrohrscheibe (2a) in Strömungsrichtung des primären Fluids vorgelagerter Hitzeschild (19) vorhanden ist, die Geradrohre (5) des Rohrbündelwärmetauschers (1) aus einem ferritischen, nichtrostenden Stahl bestehen, in jedem Geradrohr (5) von der Anzahl von Geradrohren (5) eine thermische Isolationseinrichtung auf Höhe der Eintrittsrohrscheibe (2a) angeordnet ist, und der Außenmantel (3) des Druckbehälters (26) aus einem nicht legierten Stahl besteht.

2. Gasturbinenkühlluftkühler gemäß Anspruch 1,
**dadurch gekennzeichnet,**
**dass** die Geradrohre (5) aus einem der folgenden ferritischen, nichtrostenden Edelstähle bestehen: 1.4509 (DIN EN 10088-1:2005), 1.4510 (DIN EN 10088-1:2005), 1.4511 (DIN EN 10088-1:2005), 1.4512 (DIN EN 10088-1:2005), 1.4513 (DIN EN 10088-1:2005), 1.4520 (DIN EN 10088-1:2005), 1.4521 (DIN EN 10088-1:2005), 1.4607 (prEN 10088-2011), TP409 (ASME), TP439 (ASME) oder TP444 (ASME).

3. Gasturbinenkühlluftkühler gemäß einem der Ansprüche 1 oder 2,
**dadurch gekennzeichnet,**
**dass** der Außenmantel (3) aus einem der folgenden nicht legierten Stähle besteht: P355NH (DIN EN 10028-3), 15NiCuMoNb5-6-4 (DIN EN 10028-2), 20MnMoNi4-5 (DIN EN 10028-2), 13CrMo4-5 (DIN EN 10028-2), 10CrMo9-10 (DIN EN 10028-2), SA-516-Gr.71 (ASME), SA-302-Gr. B (ASME) oder SA-533-Gr. B (ASME).

4. Gasturbinenkühlluftkühler gemäß einem der vorhergehenden Ansprüche,
**dadurch gekennzeichnet,**
**dass** die thermische Isolationseinrichtung eine Hülse (8) umfasst.

5. Gasturbinenkühlluftkühler gemäß Anspruch 4,
**dadurch gekennzeichnet,**
**dass** die Hülse (8) zu wenigstens einem Außenrand (23) hin in Axialrichtung der Hülse (8) abgeflacht ausgebildet ist und einen sich in Strömungsrichtung vergrößernden Innendurchmesser aufweist.

6. Gasturbinenkühlluftkühler gemäß einem der Ansprüche 4 oder 5,
**dadurch gekennzeichnet,**
**dass** die Hülse (8) zu wenigstens einem Außenrand (24) hin einen in Radialrichtung vorstehenden Anschlagkragen (17) aufweist, dessen Anschlagdurchmesser größer als der innendurchmesser des zumindest einen Geradrohres (5) ist.

7. Gasturbinenkühlluftkühler gemäß einem der Ansprüche 4 bis 6,
**dadurch gekennzeichnet,**
**dass** die Hülse (8) im Bereich zwischen ihren Außenrändern (23, 24) eine in Axialrichtung verlaufende Ringaussparung aufweist, über die zwischen einer Außenmantelfläche der Hülse (8) und der Innenwandung des zumindest einen Geradrohres (5) ein Aufnahmehohlraum (17) ausgebildet ist.

8. Gasturbinenkühlluftkühler gemäß einem der Ansprüche 4 bis 7,
**dadurch gekennzeichnet,**
**dass** zwischen der Hülse (8) und einer Innenwandung des zumindest einen Geradrohres (5) ein Isolator (13), insbesondere im Bereich des Aufnahmehohlraums (17), angeordnet ist.

9. Gasturbinenkühlluftkühler gemäß Anspruch 8,
**dadurch gekennzeichnet,**
**dass** der Isolator (13) ein Isolationskörper ist, welcher in dem zumindest einen Geradrohr (5) durch die Hülse (8) formschlüssig und/oder kraftschlüssig fixiert ist, wobei der Isolationskörper insbesondere aus einem Isolationspapier besteht.

10. Gasturbinenkühlluftkühler gemäß einem der Ansprüche 8 oder 9,
**dadurch gekennzeichnet,**
**dass** der Isolationskörper die Innenwandung des zumindest einen Geradrohres (5) zumindest teilweise bedeckt, insbesondere wenigstens im Bereich auf Höhe der Eintrittsrohrscheibe (2a).

11. Gasturbinenkühlluftkühler gemäß einem der vorhergehenden Ansprüche
**dadurch gekennzeichnet,**
**dass** der Hitzeschild (19) zu den Geradrohren (5) korrespondierende Durchgangsöffnungen (6) aufweist, und dass die thermische Isolationseinrichtung derart ausgebildet ist, dass sie sich von der der Eintrittsrohrscheibe (2a) abgewandten Seite bis auf Höhe der Eintrittsrohrscheibe (2a) erstreckt.

12. Gasturbinenkühlluftkühler gemäß Anspruch 11,
**dadurch gekennzeichnet,**
**dass** der Hitzeschild (19) eine Keramikfaserplatte (29) aufweist.

13. Gasturbinenkühlluftkühler gemäß Anspruch 12,
**dadurch gekennzeichnet,**
**dass** eine Halteeinrichtung (30) vorhanden ist, die derart ausgebildet ist, dass sie die Keramikfaserplatte (29) vor der Eintrittsrohrscheibe (2a) fixiert, insbesondere umfassend eine Vielzahl von Halteklammern und/oder Halteblechen.

14. Gasturbinenkühlluftkühler gemäß Anspruch 13,
**dadurch gekennzeichnet,**
**dass** die Halteklammern und/oder Haltebleche ringförmig entlang der Innenmantelfläche des Außenmantels (3) angeordnet sind.

15. Gasturbinenkühlluftkühler gemäß einem der vorhergehenden Ansprüche,
**dadurch gekennzeichnet,**
**dass** er zur Kühlung von Kühlluft von Gasturbinen in Gasturbinenkraftwerken oder Gas-und-Dampfturbinen-Kraftwerken ausgelegt ist, insbesondere von zu kühlender Kühlluft mit Einströmtemperaturen bis maximal 550°C.

16. Gasturbinenkraftwerk oder Gas-und-Dampfturbinen-Kraftwerk mit einem Gasturbinenkühlluftkühler nach einem der vorhergehenden Ansprüche.

17. Verfahren zum Kühlen von Kühlluft mit einem Gasturbinenkühlluftkühler gemäß einem der Ansprüche 1 bis 15 in einem Gasturbinenkraftwerk oder Gas-und-Dampfturbinen-Kraftwerk gemäß Anspruch 16.

## Claims

1. Gas turbine cooling air cooler for cooling cooling air with influx temperatures of 470 °C or higher in a gas turbine in a gas turbine power plant or in a gas and steam turbine power plant, comprising a tube bundle heat exchanger (1) with a straight-tube configuration, the tube bundle heat exchanger (1) comprising
- a pressure vessel (26) with an in particular essentially hollow-cylindrical outer casing (3), an inlet tubesheet (2a) and an outlet tubesheet (2b), which together define an interior space (4) of the pressure vessel (26),
- a straight-tube bundle with a plurality of straight tubes (5) that are arranged so as to lead into the inlet tubesheet (2a) and the outlet tubesheet (2b) and that extend through the interior space (4) of the pressure vessel (26),
- an inlet (ES1), via which a primary fluid to be cooled is guided to the inlet tubesheet (2a) and from there into the straight tubes (5), and an outlet (AS1), via which the cooled primary fluid coming from the straight tubes (5) is discharged via the outlet tubesheet (2b),
- an inlet (ES2), via which a secondary fluid is introduced into the interior space (4) for cooling purposes, and an outlet (AS2), via which the secondary fluid is discharged from the interior space (4),
wherein
a heat shield (19) arranged before the inlet tubesheet (2a) in the direction of flow of the primary fluid is provided,
the straight tubes (5) of the tube bundle heat exchanger (1) are made of a ferritic, stainless steel,
a thermal insulation device is arranged inside each of the plurality of straight tubes (5) at the level of the inlet tubesheet (2a), and
the outer casing (3) of the pressure vessel (26) is made of a non-alloyed steel.

2. Gas turbine cooling air cooler according to claim 1,
**characterized in that**
the straight tubes are made of one of the following ferritic, stainless steels: 1.4509 (DIN EN 10088-1:2005), 1.4510 (DIN EN 10088-1:2005), 1.4511 (DIN EN 10088-1:2005), 1.4512 (DIN EN 10088-1:2005), 1.4513 (DIN EN 10088-1:2005), 1.4520 (DIN EN 10088-1:2005), 1.4521 (DIN EN 10088-1:2005), 1.4607 (prEN 10088-2011), TP409 (ASME), TP439 (ASME) or TP444 (ASME).

3. Gas turbine cooling air cooler according to claim 1 or 2,
**characterized in that**
the outer casing (3) is made of one of the following unalloyed steels P355NH (DIN EN 10028-3), 15NiCuMoNb5-6-4 (DIN EN 10028-2), 20MnMoNi4-5 (DIN EN 10028-2), 13CrMo4-5 (DIN EN 10028-2), 10CrMo9-10 (DIN EN 10028-2), SA-516-Gr.71 (ASME), SA-302-Gr. B (ASME) or SA-533-Gr. B (ASME).

4. Gas turbine cooling air cooler according to one of the preceding claims,
**characterized in that**
the thermal insulation device comprises a ferrule (8).

5. Gas turbine cooling air cooler according to claim 4,
**characterized in that**
the ferrule (8) is configured so as to become flatter toward at least one outer edge (23) in the axial direction of the ferrule (8) and to have an increasing inner diameter in the direction of flow.

6. Gas turbine cooling air cooler according to claim 4 or 5,
**characterized in that**
the ferrule (8) comprises a stop collar (17) towards at least one outer edge (24), the stop collar (17) protruding in the radial direction and having a contact surface diameter that is larger than the inner diameter of the at least one straight tube (5).

7. Gas turbine cooling air cooler according to one of claims 4 to 6,
**characterized in that**
the ferrule (8) comprises an annular recess extending in the axial direction in the area between its outer edges (23, 24), the annular recess forming a receiving cavity (17) between an outside casing surface of the ferrule (8) and the inside wall of the at least one straight tube (5).

8. Gas turbine cooling air cooler according to one of claims 4 to 7,
**characterized in that**
an insulator (13) is arranged between the ferrule (8) and an inside wall of the at least one straight tube (5), in particular in the area of the receiving cavity (17).

9. Gas turbine cooling air cooler according to claim 8,
**characterized in that**
the insulator (13) is an insulation body that is fixed inside the at least one straight tube (5) in a positive and/or non-positive manner by means of the ferrule (8), the insulation body in particular consisting of an insulating paper.

10. Gas turbine cooling air cooler according to claim 8 or 9,
**characterized in that**
the insulation body at least partially covers the inside wall of the at least one straight tube (5), in particular at least in the area at the level of the inlet tubesheet (2a).

11. Gas turbine cooling air cooler according to the previous claims,
**characterized in that**
the heat shield (19) comprises passage openings (6) corresponding to the straight tubes (5) and **in that** the thermal insulation device is configured so as to extend from the side facing away from the inlet tubesheet (2a) up to the level of the inlet tubesheet (2a).

12. Gas turbine cooling air cooler according to claim 11,
**characterized in that**
the heat shield (19) comprises a ceramic fiber plate (29).

13. Gas turbine cooling air cooler according to claim 12,
**characterized in that**
a holding device (30) is provided that is configured to fix the ceramic fiber plate (29) in front of the inlet tubesheet (2a) and that in particular comprises a plurality of holding brackets and/or retaining plates.

14. Gas turbine cooling air cooler according to claim 13,
**characterized in that**
the holding brackets and/or retaining plates are arranged annularly along the inside surface of the outer casing (3).

15. Gas turbine cooling air cooler according to one of the preceding claims,
**characterized in that**
it is designed for cooling cooling air of gas turbines in gas turbine power plants or gas and steam turbine power plants, in particular for cooling cooling air with inlet temperatures up to a maximum of 550 °C.

16. Gas turbine power plant or gas and steam turbine power plant with a gas turbine cooling air cooler according to one of the preceding claims.

17. A method for cooling cooling air using a gas turbine cooling air cooler according to one of claims 1 to 15 in a gas turbine power plant or a gas and steam turbine power plant according to claim 16.

## Revendications

1. Refroidisseur d'air de refroidissement pour turbine à gaz, destiné à refroidir de l'air de refroidissement avec des températures de 470°C ou supérieures en entrée dans une turbine à gaz dans une installation à turbine à gaz ou dans une installation à turbine à gaz et à vapeur, comprenant un échangeur de chaleur (1) à faisceau de tubes avec une configuration à tubes droits, l'échangeur de chaleur (1) à faisceau de tubes comprenant :
- un récipient sous pression (26) avec une enveloppe extérieure (3) en particulier essentiellement cylindrique creuse, une plaque tubulaire d'entrée (2a) et une plaque tubulaire de sortie (2b), qui définissent ensemble un espace intérieur (4) du récipient sous pression (26),
- un faisceau de tubes droits avec une pluralité de tubes droits (5) qui sont disposés de manière à déboucher dans la plaque tubulaire d'entrée (2a) et dans la plaque tubulaire de sortie (2b) et qui s'étendent dans l'espace intérieur (4) du récipient sous pression (26),
- une entrée (ES1), via laquelle un fluide primaire à refroidir est guidé jusqu'à la plaque tubulaire d'entrée (2a) et, de là, dans les tubes droits (5), et une sortie (AS1), via laquelle le fluide primaire refroidi provenant des tubes droits (5) est évacué via la plaque tubulaire de sortie (2b),
- une entrée (ES2), via laquelle un fluide secondaire est introduit dans l'espace intérieur (4) à des fins de refroidissement, et une sortie (AS2), via laquelle le fluide secondaire est évacué de l'espace intérieur (4),
dans lequel
un écran thermique (19) placé avant la plaque tubulaire d'entrée (2a) dans la direction d'écoulement du fluide primaire est présent,
les tubes droits (5) de l'échangeur de chaleur (1) à faisceau de tubes sont réalisés en acier inoxydable ferritique,
un dispositif d'isolation thermique est disposé à l'intérieur de chacun de la pluralité de tubes droits (5) au niveau de la plaque tubulaire d'entrée (2a), et
l'enveloppe extérieure (3) du récipient sous pression (26) est réalisée en acier non allié.

2. Refroidisseur d'air de refroidissement pour turbine à gaz selon la revendication 1,
***caractérisé en ce que***
les tubes droits sont réalisés dans l'un des aciers inoxydables ferritiques suivants : 1.4509 (DIN EN 10088-1:2005), 1.4510 (DIN EN 10088-1:2005), 1.4511 (DIN EN 10088-1:2005), 1.4512 (DIN EN 10088-1:2005), 1.4513 (DIN EN 10088-1:2005), 1.4520 (DIN EN 10088-1:2005), 1.4521 (DIN EN 10088-1:2005), 1.4607 (prEN 10088-2011), TP409 (ASME), TP439 (ASME) ou TP444 (ASME).

3. Refroidisseur d'air de refroidissement pour turbine à gaz selon la revendication 1 ou 2,
***caractérisé en ce que***
l'enveloppe extérieure (3) est réalisée dans l'un des aciers non alliés suivants : P355NH (DIN EN 10028-3), 15NiCuMoNb5-6-4 (DIN EN 10028-2), 20MnMoNi4-5 (DIN EN 10028-2), 13CrMo4-5 (DIN EN 10028-2), 10CrMo9-10 (DIN EN 10028-2), SA-516-Gr.71 (ASME), SA-302-Gr. B (ASME) ou SA-533-Gr. B (ASME).

4. Refroidisseur d'air de refroidissement pour turbine à gaz selon l'une quelconque des revendications précédentes,
***caractérisé en ce que***
le dispositif d'isolation thermique comprend une douille (8).

5. Refroidisseur d'air de refroidissement pour turbine à gaz selon la revendication 4,
***caractérisé en ce que***
la douille (8) est configurée de manière à devenir plus plate vers au moins un bord extérieur (23) dans la direction axiale de la douille (8) et à présenter un diamètre intérieur croissant dans la direction de l'écoulement.

6. Refroidisseur d'air de refroidissement pour turbine à gaz selon la revendication 4 ou 5,
***caractérisé en ce que***
la douille (8) comprend un collier d'arrêt (17) vers au moins un bord extérieur (24), le collier d'arrêt (17) faisant saillie dans la direction radiale et ayant un diamètre de surface de contact qui est supérieur au diamètre intérieur dudit au moins un tube droit (5).

7. Refroidisseur d'air de refroidissement pour turbine à gaz selon l'une quelconque des revendications 4 à 6,
***caractérisé en ce que***
la douille (8) comprend un évidement annulaire s'étendant dans la direction axiale dans la zone située entre ses bords extérieurs (23, 24), l'évidement annulaire formant une cavité réceptrice (17) entre une surface d'enveloppe extérieure de la douille (8) et la paroi intérieure dudit au moins un tube droit (5).

8. Refroidisseur d'air de refroidissement pour turbine à gaz selon l'une quelconque des revendications 4 à 7,
***caractérisé en ce que***
un isolant (13) est disposé entre la douille (8) et une paroi intérieure dudit au moins un tube droit (5), en particulier dans la zone de la cavité réceptrice (17).

9. Refroidisseur d'air de refroidissement pour turbine à gaz selon la revendication 8,
***caractérisé en ce que***
l'isolant (13) est un corps isolant qui est fixé à l'intérieur dudit au moins un tube droit (5) par complémentarité de formes et/ou par force au moyen de la douille (8), le corps isolant étant en particulier constitué d'un papier isolant.

10. Refroidisseur d'air de refroidissement pour turbine à gaz selon la revendication 8 ou 9,
***caractérisé en ce que***
le corps isolant recouvre au moins partiellement la paroi intérieure dudit au moins un tube droit (5), en particulier au moins dans la zone située au niveau de la plaque tubulaire d'entrée (2a).

11. Refroidisseur d'air de refroidissement pour turbine à gaz selon les revendications précédentes,
***caractérisé en ce que***
l'écran thermique (19) comprend des ouvertures de passage (6) correspondant aux tubes droits (5) et ***en ce que*** le dispositif d'isolation thermique est configuré de manière à s'étendre à partir du côté opposé à la plaque tubulaire d'entrée (2a) en montant jusqu'au niveau de la plaque tubulaire d'entrée (2a).

12. Refroidisseur d'air de refroidissement pour turbine à gaz selon la revendication 11,
***caractérisé en ce que***
l'écran thermique (19) comprend une plaque (29) en fibres de céramique.

13. Refroidisseur d'air de refroidissement pour turbine à gaz selon la revendication 12,
***caractérisé en ce que***
un dispositif de maintien (30) est prévu, qui est configuré de manière à assujettir la plaque (29) en fibres de céramique devant la plaque tubulaire d'entrée (2a) et ***en ce qu**'il* comprend une pluralité de supports de retenue et/ou de plaques de maintien.

14. Refroidisseur d'air de refroidissement pour turbine à gaz selon la revendication 13,
***caractérisé en ce que***
les supports de retenue et/ou les plaques de maintien sont disposés de manière annulaire le long de la surface intérieure de l'enveloppe extérieure (3).

15. Refroidisseur d'air de refroidissement pour turbine à gaz selon l'une quelconque des revendications précédentes,
***caractérisé en ce que***
il est conçu pour refroidir l'air de refroidissement de turbines à gaz dans des installations à turbine à gaz ou des installations à turbine à gaz et à vapeur, en particulier pour refroidir de l'air de refroidissement avec des températures en entrée allant jusqu'à un maximum de 550°C.

16. Installation à turbine à gaz ou installation à turbine à gaz et à vapeur avec un refroidisseur d'air de refroidissement pour turbine à gaz selon l'une quelconque des revendications précédentes.

17. Procédé de refroidissement d'air de refroidissement utilisant un refroidisseur d'air de refroidissement pour turbine à gaz selon l'une quelconque des revendications 1 à 15 dans une installation à turbine à gaz ou une installation à turbine à gaz et à vapeur selon la revendication 16.
